# EUROPEAN PATENT APPLICATION

(11) **EP 4 802 964 A1**
(43) Date of publication of application: **09.09.2026**
(21) Application number: 25221608.0
(22) Date of filing: 08.12.2025
(51) Int. Cl.: A47J 31/00, A47J 31/10, A47J 31/52

(54) **CONTROL METHOD FOR COFFEE MACHINE AND RELATED DEVICE**

(30) Priority: 03.03.2025 US 202563765895 P; 26.09.2025 CN 202511396958
(71) Applicant: Shenzhen Chenbei Technology Co., Ltd., Shenzhen, Guangdong 518000 (CN)
(72) Inventor: ZHENG, Xiaojun, SHENZHEN, 518000 (CN); Barnard, Pierce James, Newport Beach, 92660 (US)
(74) Representative: Bayramoglu et al.

(57) **Abstract**

The provided is a control method for a coffee machine and a related device. In the control method, when a brewing action corresponding to a brewing stage is executed, a reciprocating rod of a reciprocating motor is driven based on a second control parameter that corresponds to a preset brewing pattern of the brewing stage to control a spout to move on a coffee basket, and a rotating plate of a rotating motor is driven based on a third control parameter that corresponds to the preset brewing pattern of the brewing stage to control the coffee basket to rotate, such that the coffee machine can create a complex brewing pattern. In addition, a vibration plate of a vibration motor is driven based on a first control parameter corresponding to the brewing stage to control the coffee basket to vibrate, such that coffee can be sufficiently extracted.

## Description

### TECHNICAL FIELD

Embodiments of the present disclosure relate to the technical field of coffee machines, and in particular, to a control method for a coffee machine and a related device.

### BACKGROUND

As people's pursuit of coffee quality keeps rising, pour-over coffee is widely favored for its ability to precisely control the taste and flavor of coffee. However, making pour-over coffee has problems such as low efficiency, poor stability, and high requirements for an operator's skills.

Existing coffee brewing is usually completed by using a coffee machine. The coffee machine is a specialized automatic or semi-automatic device for making coffee. It combines coffee grounds with water through processes such as heating, pressurization, and extraction to quickly and efficiently produce different types of coffee beverages. However, existing coffee machines generally adopt fixed-point and constant-speed water injection for coffee brewing, making it difficult to simulate handmade brewing to create a complex brewing pattern. Moreover, when the existing coffee machines perform the coffee brewing, water flows onto a horizontal surface of coffee grounds, resulting in small contact area between the water and the coffee grounds. This easily leads to a low coffee extraction rate, resulting in insufficient coffee extraction.

Therefore, there is an urgent need for a coffee machine that can simulate the handmade brewing to create the complex brewing pattern while achieving sufficient coffee extraction.

### SUMMARY

Embodiments of the present disclosure provide a control method for a coffee machine and a related device, so as to enable the coffee machine to simulate handmade brewing to create a complex brewing pattern while achieving sufficient coffee extraction.

The embodiments of the present disclosure provide a control method for a coffee machine, where the coffee machine includes at least a coffee basket, a spout, a reciprocating motor, a rotating motor, and a vibration motor; and the control method includes:
when receiving a brewing instruction of the coffee machine, determining at least one brewing mode of the coffee machine and an execution sequence of brewing stages in the at least one brewing mode based on the brewing instruction, and obtaining a first control parameter that is of the vibration motor and corresponds to each of the brewing stages, a second control parameter that is of the reciprocating motor and corresponds to a preset brewing pattern of each of the brewing stages, and a third control parameter that is of the rotating motor and corresponds to the preset brewing pattern of each of the brewing stages; and
when controlling the coffee machine to execute, based on the execution sequence, brewing actions corresponding to the brewing stages, driving, based on the first control parameter corresponding to each of the brewing stages, a vibration plate of the vibration motor to control the coffee basket to vibrate, driving, based on the second control parameter corresponding to each of the brewing stages, a reciprocating rod of the reciprocating motor to control the spout to move over the coffee basket, and driving, based on the third control parameter corresponding to each of the brewing stages, a rotating plate of the rotating motor to control the coffee basket to rotate, until the brewing actions corresponding to the brewing stages are completed.

Further, the determining at least one brewing mode of the coffee machine and an execution sequence of brewing stages in the at least one brewing mode based on the brewing instruction includes:
obtaining the brewing instruction input through a user interface, where the brewing instruction includes type information of the brewing stages and a count of each of the brewing stages; and
determining the at least one brewing mode of the coffee machine and the execution sequence of the brewing stages in the at least one brewing mode based on the type information of the brewing stages and the count of each of the brewing stages that are extracted from the brewing instruction.

Further, the obtaining a first control parameter that is of the vibration motor and corresponds to each of the brewing stages includes:
when the brewing stage is a pre-infusion stage, determining that the first control parameter of the vibration motor is a parameter corresponding to vibration at a frequency lower than a preset frequency;
when the brewing stage is a main extraction stage, determining that the first control parameter of the vibration motor is a parameter corresponding to vibration at a frequency higher than the preset frequency; or
when the brewing stage is a finishing stage, determining that the first control parameter of the vibration motor is a parameter corresponding to intermittent vibration.

Further, the obtaining a second control parameter that is of the reciprocating motor and corresponds to a preset brewing pattern of each of the brewing stages, and a third control parameter that is of the rotating motor and corresponds to the preset brewing pattern of each of the brewing stages includes:
when the preset brewing pattern is an annular pattern, determining that the second control parameter of the reciprocating motor is a corresponding parameter for controlling the spout to move to an edge of the coffee basket, and the third control parameter of the rotating motor is a corresponding parameter for controlling the coffee basket to start rotation; or
when the preset brewing pattern is a vortex pattern, determining that the second control parameter of the reciprocating motor is a corresponding parameter for controlling the spout to move back and forth within a preset distance at a preset speed, and the third control parameter of the rotating motor is a corresponding parameter for controlling the coffee basket to rotate at a preset rotation speed in a preset rotation direction.

Further, the driving, based on the first control parameter corresponding to each of the brewing stages, a vibration plate of the vibration motor to control the coffee basket to vibrate includes:
in a time period before water is injected into the coffee basket in each of the brewing stages, driving the vibration plate of the vibration motor to vibrate for first preset duration based on the first control parameter; and
in a time period after water is injected into the coffee basket in each of the brewing stages, driving the vibration plate of the vibration motor to vibrate for second preset duration based on the first control parameter.

Further, the control method further includes:
in the time period before the water is injected into the coffee basket in each of the brewing stages, controlling a heating tube on a mounting seat of the coffee basket to start preheating; and
after the driving the vibration plate of the vibration motor to vibrate for first preset duration based on the first control parameter, the control method further includes:
determining whether a preheating temperature of the heating tube reaches a preset temperature threshold; and
if the preheating temperature of the heating tube does not reach the preset temperature threshold, controlling the heating tube to continue heating.

Further, the driving, based on the second control parameter corresponding to each of the brewing stages, a reciprocating rod of the reciprocating motor to control the spout to move over the coffee basket, and driving, based on the third control parameter corresponding to each of the brewing stages, a rotating plate of the rotating motor to control the coffee basket to rotate includes:
if the preheating temperature of the heating tube reaches the preset temperature threshold, controlling the reciprocating motor and the rotating motor to start, and controlling the spout to inject the water into the coffee basket;
driving, through a proportional-integral-derivative (PID) control algorithm based on the second control parameter corresponding to each of the brewing stages and a detected motion parameter of the reciprocating rod of the reciprocating motor, the reciprocating rod of the reciprocating motor to control the spout to move over the coffee basket; and driving, through the PID control algorithm based on the third control parameter corresponding to each of the brewing stages and a detected motion parameter of the rotating plate of the rotating motor, the rotating plate of the rotating motor to control the coffee basket to rotate; and
until a water injection amount of the coffee basket reaches a preset water amount threshold, controlling the reciprocating motor and the rotating motor to stop operating, and controlling the spout to stop injecting water.

Further, determining that the water injection amount of the coffee basket reaches the preset water amount threshold includes:
detecting water injection duration during which the spout injects the water into the coffee basket; and
when the water injection duration reaches a preset duration threshold, determining that the water injection amount of the coffee basket reaches the preset water amount threshold.

Further, determining that the water injection amount of the coffee basket reaches the preset water amount threshold includes:
detecting a water flow volume of the spout based on a water flow sensor arranged at the spout; and
when the water flow volume reaches a preset water flow volume, determining that the water injection amount of the coffee basket reaches the preset water amount threshold.

Further, after the obtaining a second control parameter that is of the reciprocating motor and corresponds to a preset brewing pattern of each of the brewing stages, and a third control parameter that is of the rotating motor and corresponds to the preset brewing pattern of each of the brewing stages, the control method further includes:
obtaining a parameter change instruction input through a user interface; and
adjusting, based on the parameter change instruction, a second control parameter and a third control parameter that correspond to any one of the brewing stages.

The embodiments of the present disclosure further provide a coffee machine, where the coffee machine includes at least a coffee basket, a spout, a reciprocating motor, a rotating motor, a vibration motor, and a control apparatus;
the coffee basket is configured to hold coffee grounds, the spout is mounted on a reciprocating rod of the reciprocating motor, the coffee basket is mounted on a rotating plate of the rotating motor, and the rotating motor is mounted on a vibration plate of the vibration motor; and
the control apparatus is communicatively connected to the reciprocating motor, the rotating motor, and the vibration motor, and the control apparatus is configured to execute the above control method for a coffee machine.

The embodiments of the present application further provide a control apparatus for a coffee machine, including:
a central processing unit (CPU), a memory, an input/output interface, a wired or wireless network interface, and a power supply, where
the memory is a transitory memory or a persistent memory; and
the CPU is configured to communicate with the memory and execute an instruction operation in the memory on a control plane functional entity to execute the above method.

The embodiments of the present disclosure further provide a computer-readable storage medium, where the computer-readable storage medium includes an instruction, and when the instruction is run on a computer, the computer is enabled to execute the above method.

From the above technical solutions, the embodiments of the present disclosure have the following advantages:
The control method in the embodiments of the present disclosure includes: when receiving the brewing instruction of the coffee machine, determining the at least one brewing mode of the coffee machine and the execution sequence of the brewing stages in the at least one brewing mode based on the brewing instruction, and obtaining the first control parameter that is of the vibration motor and corresponds to each of the brewing stages, the second control parameter that is of the reciprocating motor and corresponds to the preset brewing pattern of each of the brewing stages, and the third control parameter that is of the rotating motor and corresponds to the preset brewing pattern of each of the brewing stages; and when controlling the coffee machine to execute, based on the execution sequence, the brewing actions corresponding to the brewing stages, driving, based on the first control parameter corresponding to each of the brewing stages, the vibration plate of the vibration motor to control the coffee basket to vibrate, driving, based on the second control parameter corresponding to each of the brewing stages, the reciprocating rod of the reciprocating motor to control the spout to move over the coffee basket, and driving, based on the third control parameter corresponding to each of the brewing stages, the rotating plate of the rotating motor to control the coffee basket to rotate, until the brewing actions corresponding to the brewing stages are completed.

It can be seen that when a brewing action corresponding to a brewing stage is executed, the reciprocating rod of the reciprocating motor is driven based on a second control parameter that corresponds to a preset brewing pattern of the brewing stage to control the spout to move over the coffee basket, and the rotating plate of the rotating motor is driven based on a third control parameter that corresponds to the preset brewing pattern of the brewing stage to control the coffee basket to rotate, such that the coffee machine can create a complex brewing pattern. In addition, the vibration plate of the vibration motor is driven based on a first control parameter corresponding to the brewing stage to control the coffee basket to vibrate, such that coffee can be sufficiently extracted. That is, the coffee machine can simulate handmade brewing to create the complex brewing pattern while achieving sufficient coffee extraction.

### BRIEF DESCRIPTION OF THE DRAWINGS

To describe the technical solutions in embodiments of the present disclosure more clearly, the following briefly describes the accompanying drawings required for describing the embodiments. Apparently, the accompanying drawings in the following description show merely some embodiments of the present disclosure, and persons of ordinary skill in the art may still derive other accompanying drawings from these accompanying drawings.
FIG. 1 is a flowchart of controlling a coffee machine according to an embodiment of the present disclosure;
FIG. 2 is a flowchart of obtaining a control parameter according to an embodiment of the present disclosure;
FIG. 3 is a flowchart of a brewing stage according to an embodiment of the present disclosure;
FIG. 4 is a schematic structural diagram of a coffee machine according to an embodiment of the present disclosure; and
FIG. 5 is a schematic diagram of a control apparatus of a coffee machine according to an embodiment of the present disclosure.

### DETAILED DESCRIPTION OF THE EMBODIMENTS

To enable those skilled in the art to better understand the solutions of the present disclosure, the technical solutions in the embodiments of the present disclosure will be clearly and completely described below in conjunction with the accompanying drawings in the embodiments of the present disclosure. Obviously, the described embodiments are only a part of, not all of, the embodiments of the present disclosure. All other embodiments obtained by a person of ordinary skill in the art based on the embodiments of the present disclosure without creative efforts shall fall within the protection scope of the present disclosure.

It should be noted that in the description of the embodiments of the present disclosure, the terms such as "center", "upper", "lower", "left", "right", "vertical", "horizontal", "inner" and "outer" indicate orientations or positional relationships based on the accompanying drawings. These terms are only for convenience of describing the embodiments of the present disclosure and simplifying the description, rather than indicating or implying that the mentioned apparatus or element must have a particular orientation and be constructed and operated in a particular orientation, and therefore should not be construed as limiting the embodiments of the present disclosure.

In the description of the embodiments of the present disclosure, it should be noted that, unless otherwise clearly specified, meanings of terms "mount", "connected with", and "connected to" should be understood in a broad sense. For example, the connection may be a fixed connection, a removable connection, or an integral connection; may be a mechanical connection or an electrical connection; may be a direct connection or an indirect connection by using an intermediate medium; or may be intercommunication between two elements. Those of ordinary skill in the art may understand specific meanings of the above terms in the embodiments of the present disclosure based on a specific situation.

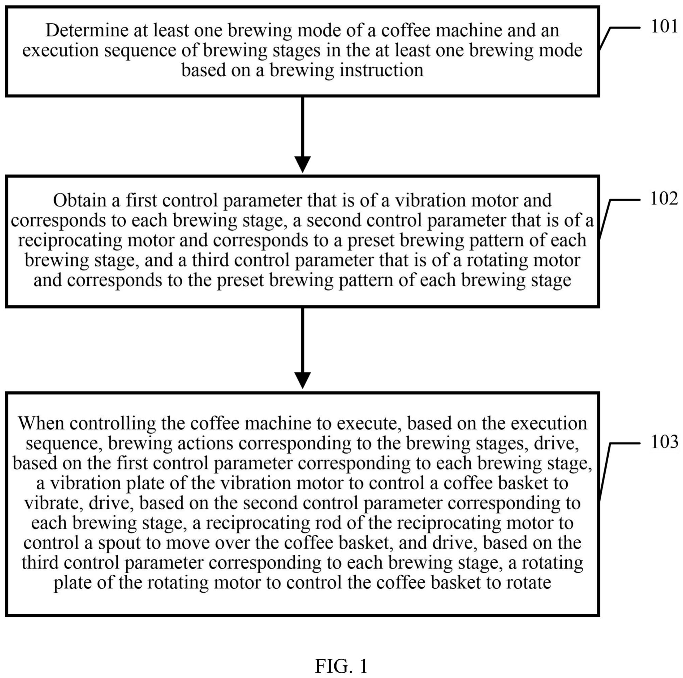

Existing coffee machines generally adopt fixed-point and constant-speed water injection for coffee brewing, making it difficult to simulate handmade brewing to create a complex brewing pattern. Moreover, when the existing coffee machines perform the coffee brewing, water flows onto a horizontal surface of coffee grounds, resulting in small contact area between the water and the coffee grounds. This easily leads to a low coffee extraction rate, failing to meet a standard (with an extraction rate of 18% to 22%) formulated by the Specialty Coffee Association (SCA). As a result, coffee extraction is insufficient. Therefore, the embodiments of the present disclosure provide a control method for a coffee machine, to enable the coffee machine to simulate the handmade brewing to create the complex brewing pattern while achieving sufficient coffee extraction. As shown in FIG. 1, the control method specifically includes the following steps:
101: At least one brewing mode of the coffee machine and an execution sequence of brewing stages in the at least one brewing mode are determined based on a brewing instruction.

In the embodiments of the present disclosure, the coffee machine includes at least a coffee basket, a spout, a reciprocating motor, a rotating motor, and a vibration motor. The coffee basket is configured to hold coffee grounds. The spout is configured to inject water into the coffee basket. The spout may also be referred to as a water pouring kettle or a nozzle, which is not specifically limited herein.

In the embodiments of the present disclosure, a control apparatus of the coffee machine can receive the brewing instruction of the coffee machine. The brewing instruction may be input by a user into the coffee machine or may be input by a user through an electronic device (such as a mobile phone or a computer) other than the coffee machine, which is not specifically limited herein. The control apparatus can determine the at least one brewing mode of the coffee machine and the execution sequence of the brewing stages in the at least one brewing mode based on the brewing instruction. It can be understood that the brewing instruction may include type information of the brewing stages. The brewing stages may include any one or more of a pre-infusion stage, a main extraction stage, and a finishing stage, which is not specifically limited herein. Preferably, the brewing stages at least include the main extraction stage. It can be understood that there is a preset execution sequence among the brewing stages, for example, the pre-infusion stage comes before the main extraction stage, and the main extraction stage comes before the finishing stage. The control apparatus can determine the execution sequence of the brewing stages based on the type information of the brewing stages and the preset execution sequence.

It can be understood that, in the embodiments of the present disclosure, there are a plurality of brewing stages in each type of brewing mode, for example, there are a plurality of main extraction stages. The execution sequence of the brewing stages includes both a sequence of each brewing stage and a count of each brewing stage. For example, the execution sequence may be: one pre-infusion stage, a plurality of main extraction stages, and one finishing stage.

102: A first control parameter that is of the vibration motor and corresponds to each brewing stage, a second control parameter that is of the reciprocating motor and corresponds to a preset brewing pattern of each brewing stage, and a third control parameter that is of the rotating motor and corresponds to the preset brewing pattern of each brewing stage are obtained.

After determining the at least one brewing mode of the coffee machine, the control apparatus of the coffee machine can obtain the first control parameter that is of the vibration motor and corresponds to each brewing stage, the second control parameter that is of the reciprocating motor and corresponds to the preset brewing pattern of each brewing stage, and the third control parameter that is of the rotating motor and corresponds to the preset brewing pattern of each brewing stage. It can be understood that first control parameters that are of the vibration motor and correspond to different types of brewing stages are different. The first control parameter of the vibration motor mainly includes a vibration frequency of the vibration motor, that is, a vibration frequency that is of the vibration motor and corresponds to each brewing stage is obtained. Similarly, second control parameters that are of the reciprocating motor and correspond to different preset brewing patterns are also different, and third control parameters that are of the rotating motor and correspond to the different preset brewing patterns are also different. The second control parameter of the reciprocating motor may be: a rotation direction (forward rotation or reverse rotation) of the reciprocating motor, a quantity of rotation turns of the reciprocating motor, and a rotation speed of the reciprocating motor; and the third control parameter of the rotating motor may be: a rotation direction (forward rotation or reverse rotation) of the rotating motor and a rotation speed of the rotating motor.

First control parameters that are of the vibration motor and respectively correspond to a plurality of types of brewing stages, second control parameters that are of the reciprocating motor and respectively correspond to a plurality of preset brewing patterns, and third control parameters that are of the rotating motor and respectively correspond to the preset brewing patterns can be pre-stored in a mapping table in a memory of the control apparatus. Based on the mapping table, the first control parameter that is of the vibration motor and corresponds to each brewing stage, the second control parameter that is of the reciprocating motor and corresponds to the preset brewing pattern of each brewing stage, and the third control parameter that is of the rotating motor and corresponds to the preset brewing pattern of each brewing stage can be directly determined. Alternatively, the control apparatus may obtain the corresponding control parameters through a network connection. This is not specifically limited herein.

103: When the coffee machine is controlled to execute, based on the execution sequence, brewing actions corresponding to the brewing stages, a vibration plate of the vibration motor is driven based on the first control parameter corresponding to each brewing stage to control the coffee basket to vibrate, a reciprocating rod of the reciprocating motor is driven based on the second control parameter corresponding to each brewing stage to control the spout to move over the coffee basket, and a rotating plate of the rotating motor is driven based on the third control parameter corresponding to each brewing stage to control the coffee basket to rotate.

After obtaining the first control parameter that is of the vibration motor and corresponds to each brewing stage, the second control parameter that is of the reciprocating motor and corresponds to the preset brewing pattern of each brewing stage, and the third control parameter that is of the rotating motor and corresponds to the preset brewing pattern of each brewing stage, when controlling the coffee machine to execute, based on the execution sequence, the brewing actions corresponding to the brewing stages, the control apparatus can drive, based on the first control parameter corresponding to each brewing stage, the vibration plate of the vibration motor to control the coffee basket to vibrate, drive, based on the second control parameter corresponding to each brewing stage, the reciprocating rod of the reciprocating motor to control the spout to move over the coffee basket, and drive, based on the third control parameter corresponding to each brewing stage, the rotating plate of the rotating motor to control the coffee basket to rotate, until the brewing actions corresponding to the brewing stages are completed.

Brewing actions corresponding to different brewing stages are different, mainly in a water flow and water pressure at which the spout injects the water into the coffee basket. For example, low pressure and a small flow are often used for water injection in the pre-infusion stage, medium pressure and a medium flow are often used for water injection in the main extraction stage, and a small flow with gradually decreased pressure is used for water injection in the finishing stage.

In the embodiments of the present disclosure, the spout is mounted on the reciprocating rod of the reciprocating motor. The second control parameter may be: the rotation direction (forward or reverse rotation) of the reciprocating motor, the quantity of rotation turns of the reciprocating motor, and the rotation speed of the reciprocating motor. An extension/retraction direction of the reciprocating rod is controlled by controlling the rotation direction (forward or reverse rotation) of the reciprocating motor, so as to control an extension/retraction direction of the spout. An extension/retraction stroke of the reciprocating rod is controlled by controlling the quantity of rotation turns of the reciprocating motor, so as to control an extension/retraction stroke of the spout. An extension/retraction speed of the reciprocating rod is controlled by controlling the rotation speed of the reciprocating motor, so as to control an extension/retraction speed of the spout. The coffee basket is mounted on the rotating plate of the rotating motor. The third control parameter may be: the rotation direction (forward or reverse rotation) of the rotating motor and the rotation speed of the rotating motor. A rotation direction of the rotating plate is controlled by controlling the rotation direction (forward or reverse rotation) of the rotating motor, so as to control a rotation direction of the coffee basket. A rotation speed of the rotating plate is controlled by controlling the rotation speed of the rotating motor, so as to control a rotation speed of the coffee basket. That is, the reciprocating motor is driven based on the second control parameter to control extension or retraction of the spout over the coffee basket, and the rotating motor is driven based on the third control parameter to control the rotation of the coffee basket, such that a water flow trajectory change during handmade brewing can be simulated, thereby creating a plurality of brewing patterns such as a spiral brewing pattern and an annular brewing pattern.

The rotating motor is mounted on the vibration plate of the vibration motor. The first control parameter mainly includes the vibration frequency of the vibration motor. A vibration frequency of the coffee basket is controlled by controlling a vibration frequency of the vibration plate of the vibration motor. In an extraction process, the coffee basket is vibrated to ensure that a coffee grounds bed is soaked more fully and evenly, which can effectively increase a displacement of a powder layer, improve extraction uniformity, optimize water distribution uniformity of the coffee grounds, and achieve sufficient coffee extraction.

The reciprocating motor may be a brushless direct current (DC) motor. A stroke of the reciprocating rod of the reciprocating motor is 0 cm to 25 cm, with a repeat positioning accuracy of ±0.1 mm. The reciprocating motor is configured to control movement of the spout to control coverage area of the water. The rotating motor may be a brushless DC motor, with a maximum rotation speed of 5 rpm, which cooperates with the reciprocating motor to inject the water and draw an arbitrary planar trajectory, thereby obtaining a corresponding brewing pattern. The vibration motor may be an electric vibrator, which is mounted below the coffee basket, with an adjustable frequency of 3 Hz to 15 Hz and an adjustable amplitude of 0.1 mm to 0.5 mm. The vibration motor is configured to vibrate the coffee grounds bed to improve extraction uniformity and achieve more sufficient extraction.

It can be understood that the vibration motor, the reciprocating motor, and the rotating motor are controlled based on a control parameter corresponding to a brewing stage, so as to more accurately achieve a required brewing pattern and extraction effect for the brewing stage. Meanwhile, when the brewing stages include a plurality of types of brewing stages, coffee in the coffee basket is brewed by executing brewing actions of these types of brewing stages. In this way, the coffee grounds in the coffee basket can be fully soaked, which helps fully extract a coffee flavor and facilitates control of the extraction process. This can further increase a coffee extraction rate and achieve more sufficient coffee extraction.

It can be seen that, in the embodiments of the present disclosure, when a brewing action corresponding to a brewing stage is executed, the reciprocating rod of the reciprocating motor is driven based on a second control parameter corresponding to a preset brewing pattern of the brewing stage to control the spout to move over the coffee basket, and the rotating plate of the rotating motor is driven based on a third control parameter corresponding to the preset brewing pattern of the brewing stage to control the coffee basket to rotate, such that the coffee machine can create a complex brewing pattern. In addition, the vibration plate of the vibration motor is driven based on a first control parameter corresponding to the brewing stage to control the coffee basket to vibrate, such that the coffee can be sufficiently extracted. That is, the coffee machine can simulate the handmade brewing to create the complex brewing pattern while achieving the sufficient coffee extraction.

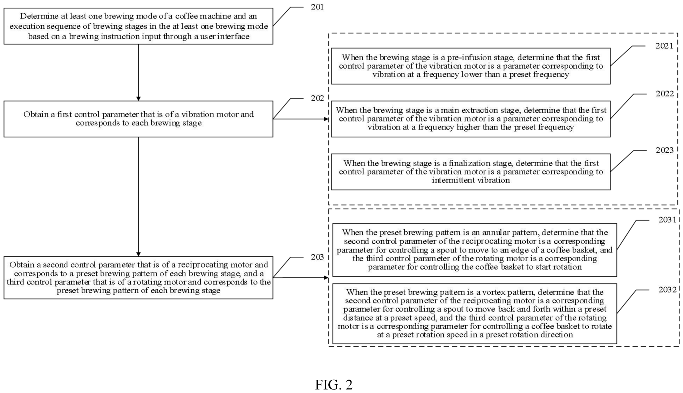

Furthermore, the following will detail a process of obtaining a control parameter of a motor, as shown in FIG. 2. The following steps are specifically included:
201: The at least one brewing mode of the coffee machine and the execution sequence of the brewing stages in the at least one brewing mode are determined based on the brewing instruction input through a user interface.

In the embodiments of the present disclosure, the control apparatus of the coffee machine can determine the at least one brewing mode of the coffee machine and the execution sequence of the brewing stages in the at least one brewing mode based on the brewing instruction input through the user interface. The user interface may be a user interface disposed on the coffee machine or a user interface disposed on an electronic device (such as a mobile phone or a computer) other than the coffee machine, which is not specifically limited herein.

Specifically, the control apparatus can obtain the brewing instruction input through the user interface. The brewing instruction includes: the type information of the brewing stages and the count of each brewing stage, for example, one pre-brewing stage and two main extraction stages. A required brewing stage and a count of the required brewing stage can be set by the user on the user interface, and the specified information is transmitted to the control apparatus through the brewing instruction. The control apparatus determines the at least one brewing mode of the coffee machine and the execution sequence of the brewing stages in the at least one brewing mode based on the type information of the brewing stages and the count of each brewing stage that are extracted from the brewing instruction.

In an implementable manner, the control apparatus can pre-set a to-be-executed brewing stage. In this case, the brewing instruction only includes the count of each brewing stage. That is, the at least one brewing mode of the coffee machine and the execution sequence of the brewing stages in the at least one brewing mode can be determined only by inputting the count of each brewing stage.

202: The first control parameter that is of the vibration motor and corresponds to each brewing stage is obtained.

In the embodiments of the present disclosure, first control parameters that are of the vibration motor and correspond to different brewing stages are different. Therefore, it is necessary to obtain the first control parameter that is of the vibration motor and corresponds to each brewing stage, which specifically includes steps 2021 to 2023.

2021: When the brewing stage is the pre-infusion stage, it is determined that the first control parameter of the vibration motor is a parameter corresponding to vibration at a frequency lower than a preset frequency.

When the brewing stage is the pre-infusion stage, it is determined that the first control parameter of the vibration motor is the parameter corresponding to the vibration at the frequency lower than the preset frequency. The preset frequency may be 6 Hz or 7 Hz, which is not specifically limited herein. The first control parameter may be set to vibration at a low frequency of 3 Hz to 5 Hz. In the pre-infusion stage, the low-frequency vibration can enable the coffee grounds layer to evenly absorb water and expand.

2022: When the brewing stage is the main extraction stage, it is determined that the first control parameter of the vibration motor is a parameter corresponding to vibration at a frequency higher than the preset frequency.

When the brewing stage is the main extraction stage, it is determined that the first control parameter of the vibration motor is the parameter corresponding to the vibration at the frequency higher than the preset frequency. The first control parameter may be set to vibration at a high frequency of 8 Hz to 12 Hz. In the main extraction stage, a powder layer channel can be broken through the high-frequency vibration, thereby increasing an extraction rate.

2023: When the brewing stage is the finishing stage, it is determined that the first control parameter of the vibration motor is a parameter corresponding to intermittent vibration.

When the brewing stage is the finishing stage, it is determined that the first control parameter of the vibration motor is the parameter corresponding to the intermittent vibration. The intermittent vibration refers to cyclically turning on the vibration for certain duration and then turning off the vibration for certain duration, for example, turning on the vibration for 1 s and then turning off the vibration for 2 s, or turning on the vibration for 2 s and then turning off the vibration for 2 s. This is not specifically limited herein. In the finishing stage, the intermittent vibration can prevent excessive extraction.

203: The second control parameter that is of the reciprocating motor and corresponds to the preset brewing pattern of each brewing stage, and the third control parameter that is of the rotating motor and corresponds to the preset brewing pattern of each brewing stage are obtained.

In the embodiments of the present disclosure, second control parameters that are of the reciprocating motor and correspond to different brewing patterns are different, and third control parameters that are of the rotating motor and correspond to the different brewing patterns are different. Therefore, the control apparatus can also obtain the second control parameter that is of the reciprocating motor and corresponds to the preset brewing pattern of each brewing stage and the third control parameter that is of the rotating motor and corresponds to the preset brewing pattern of each brewing stage, which specifically includes the following steps 2031 and 2032.

2031: When the preset brewing pattern is the annular pattern, it is determined that the second control parameter of the reciprocating motor is a corresponding parameter for controlling the spout to move to an edge of the coffee basket, and the third control parameter of the rotating motor is a corresponding parameter for controlling the coffee basket to start rotation.

When the preset brewing pattern is the annular pattern, it is determined that the second control parameter of the reciprocating motor is the corresponding parameter for controlling the spout to move to the edge of the coffee basket, and the third control parameter of the rotating motor is the corresponding parameter for controlling the coffee basket to start the rotation. That is, the second control parameter may be a stroke of the spout moving to the edge of the coffee basket, which corresponds to the quantity of rotation turns of the reciprocating motor. Based on the second control parameter, the reciprocating motor can be controlled to move the spout to the edge of the coffee basket, and when the spout is at the edge of the coffee basket, the spout is controlled to continuously discharge water. Meanwhile, the rotating motor is controlled based on the third control parameter to drive the coffee basket to rotate, thereby realizing circular water injection.

2032: When the preset brewing pattern is a vortex pattern, it is determined that the second control parameter of the reciprocating motor is a corresponding parameter for controlling the spout to move back and forth within a preset distance at a preset speed, and the third control parameter of the rotating motor is a corresponding parameter for controlling the coffee basket to rotate at a preset rotation speed in a preset rotation direction.

When the preset brewing pattern is the vortex pattern, it is determined that the second control parameter of the reciprocating motor is the corresponding parameter for controlling the spout to move back and forth within the preset distance at the preset speed, and the third control parameter of the rotating motor is the corresponding parameter for controlling the coffee basket to rotate at the preset rotation speed in the preset rotation direction. That is, the second control parameter includes: a rotation direction that is of the reciprocating motor and corresponds to the back-and-forth movement of the spout, a rotation speed that is of the reciprocating motor and corresponds to the preset speed of the spout, and a quantity of rotation turns that are of the reciprocating motor and correspond to the preset distance of the spout. The third control parameter includes: a rotation direction that is of the rotating motor and corresponds to the preset rotation direction of the coffee basket, and a rotation speed that is of the rotating motor and corresponds to the preset rotation speed of the coffee basket. The reciprocating motor is controlled based on the second control parameter to drive the spout to continuously move back and forth, and the rotating motor is controlled based on the third control parameter to drive the coffee basket to continuously rotate, thereby realizing vortex water injection.

In an implementable manner, after the second control parameter that is of the reciprocating motor and corresponds to the preset brewing pattern of each brewing stage, and the third control parameter that is of the rotating motor and corresponds to the preset brewing pattern of each brewing stage are obtained, a corresponding control parameter can also be adjusted based on an individual need of the user to modify the brewing pattern. Specifically, a parameter change instruction input through the user interface can be obtained. Based on the parameter change instruction, a second control parameter and a third control parameter that correspond to any type of brewing stage can be adjusted, which allows changing a brewing pattern of the any type of brewing stage or adjusting the corresponding brewing pattern. For example, a control parameter corresponding to the annular pattern can be modified to a control parameter corresponding to the vortex pattern, or a control parameter corresponding to the vortex pattern can be modified to a control parameter corresponding to the annular pattern. Alternatively, a diameter of a ring in the annular pattern can be adjusted by adjusting the stroke of the spout in the second control parameter.

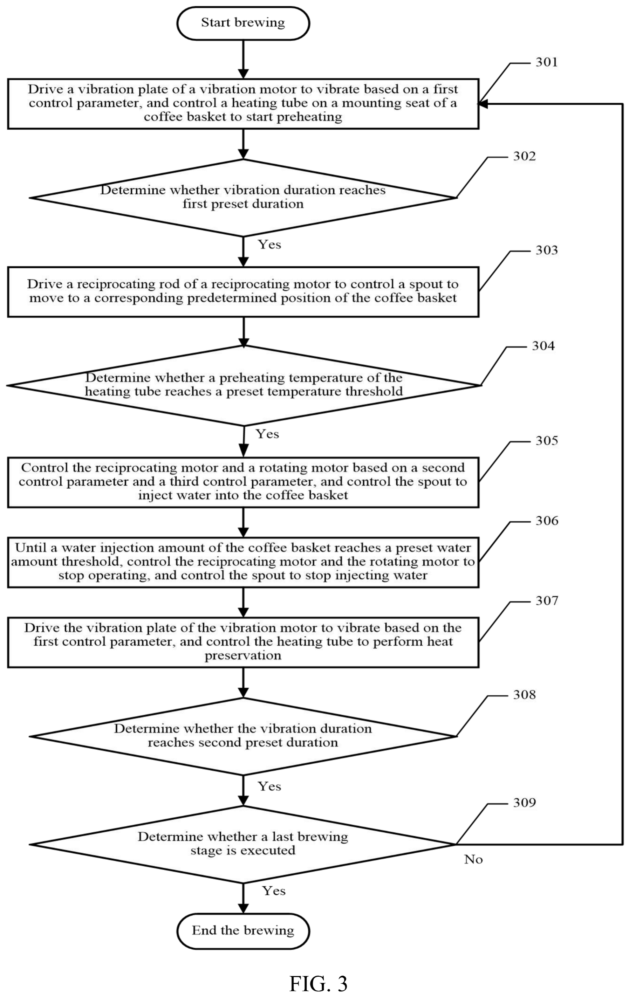

Furthermore, the following will detail a process of controlling the coffee machine to execute the brewing stages based on the execution sequence, as shown in FIG. 3. The following steps are specifically included:
301: The vibration plate of the vibration motor is driven to vibrate based on the first control parameter, and a heating tube on a mounting seat of the coffee basket is controlled to start preheating.

After receiving the brewing instruction, the control apparatus controls the coffee machine to start brewing and sequentially execute each brewing stage in the execution sequence corresponding to the brewing stages. In a time period before the water is injected into the coffee basket in each brewing stage, the vibration plate of the vibration motor is driven to vibrate for first preset duration based on the first control parameter. In the time period before the water is injected into the coffee basket in each brewing stage, the heating tube on the mounting seat of the coffee basket is controlled to start the preheating. It can be understood that each brewing stage may include at least one brewing stage, and when any type of brewing stage is executed, the any type of brewing stage may be performed once or a plurality of times, which is not specifically limited herein.

For example, in a first type of brewing stage corresponding to the execution sequence, in a time period before the water is injected into the coffee basket in the first type of brewing stage, the vibration plate of the vibration motor is driven to vibrate based on a first control parameter corresponding to the first type of brewing stage, and the heating tube on the mounting seat of the coffee basket is controlled to start the preheating.

302: Whether vibration duration reaches the first preset duration is determined. If the vibration duration reaches the first preset duration, step 303 is performed. If the vibration duration does not reach the first preset duration, the vibration plate of the vibration motor is driven to maintain the vibration.

Next, whether the vibration duration reaches the first preset duration is determined. The first preset duration may be any duration within a time range of 0 s to 20 s (excluding 0 s), which is not specifically limited herein. When the first preset duration has been reached, the vibration motor is controlled to stop vibrating.

303: The reciprocating rod of the reciprocating motor is driven to control the spout to move to a corresponding predetermined position of the coffee basket.

It can be understood that the coffee machine in the embodiments of the present disclosure may be a drip coffee machine. The spout is not exposed outside the coffee machine in an initial state. Before the water injection, it is necessary to drive the reciprocating rod of the reciprocating motor to control the spout to move to the corresponding predetermined position of the coffee basket. The predetermined position may be any position of the coffee basket. Preferably, the predetermined position is a central position of the coffee basket.

304: Whether a preheating temperature of the heating tube reaches a preset temperature threshold is determined. If the preheating temperature of the heating tube reaches the preset temperature threshold, step 305 is performed. If the preheating temperature of the heating tube does not reach the preset temperature threshold, the heating tube is controlled to continue heating.

After the vibration plate of the vibration motor is driven to vibrate for the first preset duration based on the first control parameter, whether the preheating temperature of the heating tube reaches the preset temperature threshold can be determined. The preset temperature threshold may be any temperature within a temperature range of 80°C to 95°C, which is not specifically limited herein.

305. The reciprocating motor and the rotating motor are controlled based on the second control parameter and the third control parameter, and the spout is controlled to inject the water into the coffee basket.

When determining that the preheating temperature of the heating tube reaches the preset temperature threshold, the control apparatus can control the reciprocating motor and the rotating motor based on the second control parameter and the third control parameter, and control the spout to inject the water into the coffee basket.

Specifically, if the preheating temperature of the heating tube reaches the preset temperature threshold, the reciprocating motor and the rotating motor are controlled to start, and the spout is controlled to inject the water into the coffee basket. A motion parameter of the reciprocating rod of the reciprocating motor is detected in real time. The motion parameter of the reciprocating rod is a movement parameter of the spout, including a movement stroke and a movement speed of the spout. The movement stroke of the spout can be determined based on a quantity of gratings rotated by the reciprocating motor, for example, each grating corresponds to 0.2 mm. The movement speed of the spout can be determined based on a quantity of pulses from a photoelectric switch of the reciprocating motor. Based on the second control parameter corresponding to each brewing stage and the detected motion parameter of the reciprocating rod of the reciprocating motor, the reciprocating rod of the reciprocating motor is driven through a PID control algorithm to control the spout to move over the coffee basket. That is, based on a deviation between the second control parameter and the detected motion parameter, a pulse width modulation (PWM) signal is output through the PID control algorithm to perform closed-loop control on the quantity of rotation turns of the reciprocating motor and the rotation speed of the reciprocating motor. A motion parameter of the rotating plate of the rotating motor can also be detected in real time. The motion parameter of the rotating plate is the rotation speed of the coffee basket, and the rotation speed of the coffee basket can be determined based on a quantity of pulses from a photoelectric switch of the rotating motor. Based on the third control parameter corresponding to each brewing stage and the detected motion parameter of the rotating plate of the rotating motor, the rotating plate of the rotating motor is driven through the PID control algorithm to control the coffee basket to rotate. That is, based on a deviation between the third control parameter and the detected motion parameter, a PWM signal is output through the PID control algorithm to perform closed-loop control on the rotation speed of the rotating motor.

306: Until a water injection amount of the coffee basket reaches a preset water amount threshold, the reciprocating motor and the rotating motor are controlled to stop operating, and the spout is controlled to stop injecting water.

Until the water injection amount of the coffee basket reaches the preset water amount threshold, the reciprocating motor and the rotating motor are controlled to stop operating, and the spout is controlled to stop injecting water. The preset water amount threshold is less than a capacity of the coffee basket, and may be 80% or 85% of the capacity of the coffee basket. This is not specifically limited herein.

That the water injection amount of the coffee basket reaches the preset water amount threshold may be determined as follows: Water injection duration during which the spout injects the water into the coffee basket is detected. When the water injection duration reaches a preset duration threshold, it is determined that the water injection amount of the coffee basket reaches the preset water amount threshold. The preset duration threshold may be 15 s or 14 s, which is not specifically limited herein. For example, a timer is started when the spout begins to inject the water into the coffee basket. When timing duration of the timer reaches the preset duration threshold, it is determined that the water injection amount of the coffee basket reaches the preset water amount threshold.

That the water injection amount of the coffee basket reaches the preset water amount threshold may alternatively be determined as follows: A water flow volume of the spout is detected based on a water flow sensor disposed at the spout. When the water flow volume reaches a preset water flow volume, it is determined that the water injection amount of the coffee basket reaches the preset water amount threshold. The preset water flow volume may be 75% or 80% of the capacity of the coffee basket, which is not specifically limited herein.

307: The vibration plate of the vibration motor is driven to vibrate based on the first control parameter, and the heating tube is controlled to perform heat preservation.

In the embodiments of the present disclosure, in a time period after water is injected into the coffee basket in each brewing stage, the vibration plate of the vibration motor is driven to vibrate for second preset duration based on the first control parameter. The second preset duration may be the same as or different from the first preset duration, which is not specifically limited herein. That is, after the spout is controlled to stop injecting water in a current brewing stage, the vibration plate of the vibration motor is driven to vibrate based on the first control parameter, and the heating tube is controlled to perform the heat preservation.

308: Whether the vibration duration reaches the second preset duration is determined. If the vibration duration reaches the second preset duration, step 309 is performed. If the vibration duration does not reach the second preset duration, the vibration plate of the vibration motor is driven to maintain the vibration.

Next, whether the vibration duration reaches the second preset duration can be determined. The second preset duration may be any duration within a time range of 0 s to 20 s (excluding 0 s), which is not specifically limited herein. When the second preset duration has been reached, the vibration motor is controlled to stop vibrating.

309: Whether a last brewing stage is executed is determined. If the last brewing stage is executed, the brewing process ends. If the last brewing stage is not executed, a next brewing stage is executed, and the step 301 corresponding to the next brewing stage is performed.

After the vibration motor is controlled to stop vibrating, whether the last brewing stage is executed is determined, that is, whether a last brewing stage of a last type of brewing stage in the execution sequence is executed is determined. If the last brewing stage is executed, the brewing process ends.

The coffee machine is controlled to execute the brewing stages based on the execution sequence, such that the coffee machine can simulate the handmade brewing to create the complex brewing pattern while achieving the sufficient coffee extraction.

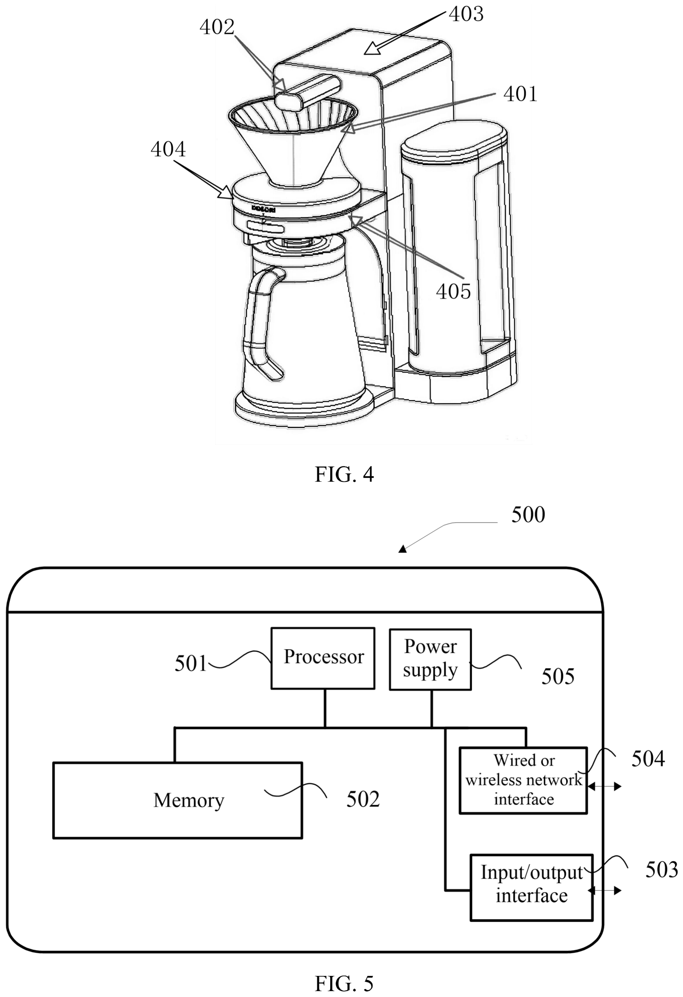

The embodiments of the present disclosure further provide a coffee machine. As shown in FIG. 4, the coffee machine includes at least coffee basket 401, spout 402, reciprocating motor 403, rotating motor 404, vibration motor 405, and a control apparatus (not shown in the figure).

The coffee basket 401 is configured to hold coffee grounds, the spout 402 is mounted on a reciprocating rod of the reciprocating motor 403, the coffee basket 401 is mounted on a rotating plate of the rotating motor 404, and the rotating motor 404 is mounted on a vibration plate of the vibration motor 405.

The control apparatus is communicatively connected to the reciprocating motor 403, the rotating motor 404, and the vibration motor 405, and the control apparatus is configured to execute the above control method for a coffee machine.

The embodiments of the present disclosure further provide control apparatus 500 for a coffee machine. As shown in FIG. 5, the control apparatus 500 in the embodiments of the present disclosure may include at least one CPU 501 and memory 502. The memory 502 stores at least one application or data.

The memory 502 may be a volatile or persistent memory. A program stored in the memory 502 may include at least one module, and each module may include a series of instruction operations on an electronic device. Furthermore, the CPU 501 may be set to communicate with the memory 502 and execute a series of instruction operations in the memory 502 on the control apparatus 500.

The control apparatus 500 may also include at least one power supply 505, at least one wired or wireless network interface 504, at least one input/output interface 503, and/or at least one operating system, such as Windows ServerTM, Mac OS XTM, UnixTM, LinuxTM, and FreeBSDTM.

The CPU 501 can perform operations described in the aforementioned first aspect or any specific method embodiment of the aforementioned first aspect, and details are not described again.

The embodiments of the present disclosure further provide a computer-readable storage medium, where the computer-readable storage medium includes an instruction, and when the instruction is run on a computer, the computer is enabled to execute the above method.

A person skilled in the art can clearly understand that, for convenience and brevity of description, reference may be made to corresponding processes in the foregoing method embodiments for specific working processes of the foregoing systems, apparatuses, and units. Details are not described herein again.

In several embodiments provided in the present disclosure, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may be or may not be physically separate, and parts displayed as units may be or may not be physical units, may be located in one position, or may be distributed on a plurality of network units. Some or all of the units may be selected based on actual requirements to achieve the objectives of the solutions in the embodiments.

In addition, functional units in the embodiments of the present disclosure may be integrated into one processing unit, each of the units may exist alone physically, or two or more units may be integrated into one unit. The above integrated unit may be implemented either in a form of hardware or in a form of a software functional unit.

The integrated unit, if implemented in the form of a software functional unit and sold or used as a stand-alone product, may be stored in a computer-readable storage medium. Based on such an understanding, the technical solutions in the present disclosure essentially, or the part contributing to the prior art, or all or some of the technical solutions may be implemented in a form of a software product. The computer software product is stored in a storage medium, and includes instructions for instructing a computer device (which may be a personal computer, a server, a network device, or the like) to perform all or some of the steps of the method described in the embodiments of the present disclosure. The foregoing storage medium includes any medium that can store program code, such as a universal serial bus (USB) flash disk, a mobile hard disk, a read-only memory (ROM), a random access memory (RAM), a magnetic disk, or an optical disk.

## Claims

1. A control method for a coffee machine, wherein the coffee machine comprises at least a coffee basket (401), a spout (402), a reciprocating motor (403), a rotating motor (404), and a vibration motor (405); and the control method comprises:
when receiving a brewing instruction of the coffee machine, determining at least one brewing mode of the coffee machine and an execution sequence of brewing stages in the at least one brewing mode based on the brewing instruction, and obtaining a first control parameter that is of the vibration motor (405) and corresponds to each of the brewing stages, a second control parameter that is of the reciprocating motor (403) and corresponds to a preset brewing pattern of each of the brewing stages, and a third control parameter that is of the rotating motor (404) and corresponds to the preset brewing pattern of each of the brewing stages; and
when controlling the coffee machine to execute, based on the execution sequence, brewing actions corresponding to the brewing stages, driving, based on the first control parameter corresponding to each of the brewing stages, a vibration plate of the vibration motor (405) to control the coffee basket (401) to vibrate, driving, based on the second control parameter corresponding to each of the brewing stages, a reciprocating rod of the reciprocating motor (403) to control the spout (402) to move over the coffee basket (401), and driving, based on the third control parameter corresponding to each of the brewing stages, a rotating plate of the rotating motor (404) to control the coffee basket (401) to rotate, until the brewing actions corresponding to the brewing stages are completed.

2. The control method according to claim 1, wherein the determining the at least one brewing mode of the coffee machine and the execution sequence of the brewing stages in the at least one brewing mode based on the brewing instruction comprises:
obtaining the brewing instruction input through a user interface, wherein the brewing instruction comprises type information of the brewing stages and a count of each of the brewing stages; and
determining the at least one brewing mode of the coffee machine and the execution sequence of the brewing stages in the at least one brewing mode based on the type information of the brewing stages and the count of each of the brewing stages that are extracted from the brewing instruction.

3. The control method according to claim 1, wherein the obtaining the first control parameter that is of the vibration motor (405) and corresponds to each of the brewing stages comprises:
when the brewing stage is a pre-infusion stage, determining that the first control parameter of the vibration motor (405) is a parameter corresponding to vibration at a frequency lower than a preset frequency;
when the brewing stage is a main extraction stage, determining that the first control parameter of the vibration motor (405) is a parameter corresponding to vibration at a frequency higher than the preset frequency; or
when the brewing stage is a finishing stage, determining that the first control parameter of the vibration motor (405) is a parameter corresponding to intermittent vibration.

4. The control method according to claim 1, wherein the obtaining the second control parameter that is of the reciprocating motor (403) and corresponds to the preset brewing pattern of each of the brewing stages, and the third control parameter that is of the rotating motor (404) and corresponds to the preset brewing pattern of each of the brewing stages comprises:
when the preset brewing pattern is an annular pattern, determining that the second control parameter of the reciprocating motor (403) is a corresponding parameter for controlling the spout (402) to move to an edge of the coffee basket (401), and the third control parameter of the rotating motor (404) is a corresponding parameter for controlling the coffee basket (401) to start rotation; or
when the preset brewing pattern is a vortex pattern, determining that the second control parameter of the reciprocating motor (403) is a corresponding parameter for controlling the spout (402) to move back and forth within a preset distance at a preset speed, and the third control parameter of the rotating motor (404) is a corresponding parameter for controlling the coffee basket (401) to rotate at a preset rotation speed in a preset rotation direction.

5. The control method according to claim 1, wherein the driving, based on the first control parameter corresponding to each of the brewing stages, the vibration plate of the vibration motor (405) to control the coffee basket (401) to vibrate comprises:
in a time period before water is injected into the coffee basket (401) in each of the brewing stages, driving the vibration plate of the vibration motor (405) to vibrate for first preset duration based on the first control parameter; and
in a time period after water is injected into the coffee basket (401) in each of the brewing stages, driving the vibration plate of the vibration motor (405) to vibrate for second preset duration based on the first control parameter.

6. The control method according to claim 5, further comprising:
in the time period before the water is injected into the coffee basket (401) in each of the brewing stages, controlling a heating tube on a mounting seat of the coffee basket (401) to start preheating; and
after the driving the vibration plate of the vibration motor (405) to vibrate for the first preset duration based on the first control parameter, the control method further comprises:
determining whether a preheating temperature of the heating tube reaches a preset temperature threshold; and
if the preheating temperature of the heating tube does not reach the preset temperature threshold, controlling the heating tube to continue heating.

7. The control method according to claim 6, wherein the driving, based on the second control parameter corresponding to each of the brewing stages, the reciprocating rod of the reciprocating motor (403) to control the spout (402) to move over the coffee basket (401), and driving, based on the third control parameter corresponding to each of the brewing stages, the rotating plate of the rotating motor (404) to control the coffee basket (401) to rotate comprises:
if the preheating temperature of the heating tube reaches the preset temperature threshold, controlling the reciprocating motor (403) and the rotating motor (404) to start, and controlling the spout (402) to inject the water into the coffee basket (401);
driving, through a proportional-integral-derivative (PID) control algorithm based on the second control parameter corresponding to each of the brewing stages and a detected motion parameter of the reciprocating rod of the reciprocating motor (403), the reciprocating rod of the reciprocating motor (403) to control the spout (402) to move over the coffee basket (401); and driving, through the PID control algorithm based on the third control parameter corresponding to each of the brewing stages and a detected motion parameter of the rotating plate of the rotating motor (404), the rotating plate of the rotating motor (404) to control the coffee basket (401) to rotate; and
until a water injection amount of the coffee basket (401) reaches a preset water amount threshold, controlling the reciprocating motor (403) and the rotating motor (404) to stop operating, and controlling the spout (402) to stop injecting water.

8. The control method according to claim 7, wherein the determining that the water injection amount of the coffee basket (401) reaches the preset water amount threshold comprises:
detecting water injection duration during which the spout (402) injects the water into the coffee basket (401); and
when the water injection duration reaches a preset duration threshold, determining that the water injection amount of the coffee basket (401) reaches the preset water amount threshold.

9. The control method according to claim 7, wherein the determining that the water injection amount of the coffee basket (401) reaches the preset water amount threshold comprises:
detecting a water flow volume of the spout (402) based on a water flow sensor arranged at the spout (402); and
when the water flow volume reaches a preset water flow volume, determining that the water injection amount of the coffee basket (401) reaches the preset water amount threshold.

10. The control method according to claim 1, wherein after the obtaining the second control parameter that is of the reciprocating motor (403) and corresponds to the preset brewing pattern of each of the brewing stages, and the third control parameter that is of the rotating motor (404) and corresponds to the preset brewing pattern of each of the brewing stages, the control method further comprises:
obtaining a parameter change instruction input through a user interface; and
adjusting, based on the parameter change instruction, a second control parameter and a third control parameter that correspond to any one of the brewing stages.

11. A coffee machine, wherein the coffee machine comprises at least a coffee basket (401), a spout (402), a reciprocating motor (403), a rotating motor (404), a vibration motor (405), and a control apparatus (500);
the coffee basket (401) is configured to hold coffee grounds, the spout (402) is mounted on a reciprocating rod of the reciprocating motor (403), the coffee basket (401) is mounted on a rotating plate of the rotating motor (404), and the rotating motor (404) is mounted on a vibration plate of the vibration motor (405); and
the control apparatus (500) is communicatively connected to the reciprocating motor (403), the rotating motor (404), and the vibration motor (405), and the control apparatus (500) is configured to execute the control method for the coffee machine according to any one of claims 1 to 10.

12. A control apparatus (500) for a coffee machine, comprising:
a central processing unit (CPU) (501), a memory (502), an input/output interface (503), a wired or wireless network interface (504), and a power supply (505), wherein
the memory (502) is a transitory memory or a persistent memory; and
the CPU (501) is configured to communicate with the memory (502) and execute an instruction operation in the memory (502) on a control plane functional entity to execute the control method according to any one of claims 1 to 10.

13. A computer-readable storage medium, wherein the computer-readable storage medium comprises an instruction, and when the instruction is run on a computer, the computer is enabled to execute the control method according to any one of claims 1 to 10.

## Amended claims

### Amended claims in accordance with Rule 137(2) EPC.

1. A control method for a coffee machine, wherein the coffee machine comprises at least a coffee basket (401), a spout (402), a reciprocating motor (403), a rotating motor (404), and a vibration motor (405); and the control method comprises:
when receiving a brewing instruction of the coffee machine, determining at least one brewing mode of the coffee machine and an execution sequence of brewing stages in the at least one brewing mode based on the brewing instruction, and obtaining a first control parameter that is of the vibration motor (405) and corresponds to each of the brewing stages, a second control parameter that is of the reciprocating motor (403) and corresponds to a preset brewing pattern of each of the brewing stages, and a third control parameter that is of the rotating motor (404) and corresponds to the preset brewing pattern of each of the brewing stages; and
when controlling the coffee machine to execute, based on the execution sequence, brewing actions corresponding to the brewing stages, driving, based on the first control parameter corresponding to each of the brewing stages, a vibration plate of the vibration motor (405) to control the coffee basket (401) to vibrate, driving, based on the second control parameter corresponding to each of the brewing stages, a reciprocating rod of the reciprocating motor (403) to control the spout (402) to move over the coffee basket (401), and driving, based on the third control parameter corresponding to each of the brewing stages, a rotating plate of the rotating motor (404) to control the coffee basket (401) to rotate, until the brewing actions corresponding to the brewing stages are completed;
the obtaining the first control parameter that is of the vibration motor (405) and corresponds to each of the brewing stages comprises:
when the brewing stage is a pre-infusion stage, determining that the first control parameter of the vibration motor (405) is a parameter corresponding to vibration at a frequency lower than a preset frequency;
when the brewing stage is a main extraction stage, determining that the first control parameter of the vibration motor (405) is a parameter corresponding to vibration at a frequency higher than the preset frequency; or
when the brewing stage is a finishing stage, determining that the first control parameter of the vibration motor (405) is a parameter corresponding to intermittent vibration.

2. The control method according to claim 1, wherein the determining the at least one brewing mode of the coffee machine and the execution sequence of the brewing stages in the at least one brewing mode based on the brewing instruction comprises:
obtaining the brewing instruction input through a user interface, wherein the brewing instruction comprises type information of the brewing stages and a count of each of the brewing stages; and
determining the at least one brewing mode of the coffee machine and the execution sequence of the brewing stages in the at least one brewing mode based on the type information of the brewing stages and the count of each of the brewing stages that are extracted from the brewing instruction.

3. The control method according to claim 1, wherein the obtaining the second control parameter that is of the reciprocating motor (403) and corresponds to the preset brewing pattern of each of the brewing stages, and the third control parameter that is of the rotating motor (404) and corresponds to the preset brewing pattern of each of the brewing stages comprises:
when the preset brewing pattern is an annular pattern, determining that the second control parameter of the reciprocating motor (403) is a corresponding parameter for controlling the spout (402) to move to an edge of the coffee basket (401), and the third control parameter of the rotating motor (404) is a corresponding parameter for controlling the coffee basket (401) to start rotation; or
when the preset brewing pattern is a vortex pattern, determining that the second control parameter of the reciprocating motor (403) is a corresponding parameter for controlling the spout (402) to move back and forth within a preset distance at a preset speed, and the third control parameter of the rotating motor (404) is a corresponding parameter for controlling the coffee basket (401) to rotate at a preset rotation speed in a preset rotation direction.

4. The control method according to claim 1, wherein the driving, based on the first control parameter corresponding to each of the brewing stages, the vibration plate of the vibration motor (405) to control the coffee basket (401) to vibrate comprises:
in a time period before water is injected into the coffee basket (401) in each of the brewing stages, driving the vibration plate of the vibration motor (405) to vibrate for first preset duration based on the first control parameter; and
in a time period after water is injected into the coffee basket (401) in each of the brewing stages, driving the vibration plate of the vibration motor (405) to vibrate for second preset duration based on the first control parameter.

5. The control method according to claim 4, further comprising:
in the time period before the water is injected into the coffee basket (401) in each of the brewing stages, controlling a heating tube on a mounting seat of the coffee basket (401) to start preheating; and
after the driving the vibration plate of the vibration motor (405) to vibrate for the first preset duration based on the first control parameter, the control method further comprises:
determining whether a preheating temperature of the heating tube reaches a preset temperature threshold; and
if the preheating temperature of the heating tube does not reach the preset temperature threshold, controlling the heating tube to continue heating.

6. The control method according to claim 5, wherein the driving, based on the second control parameter corresponding to each of the brewing stages, the reciprocating rod of the reciprocating motor (403) to control the spout (402) to move over the coffee basket (401), and driving, based on the third control parameter corresponding to each of the brewing stages, the rotating plate of the rotating motor (404) to control the coffee basket (401) to rotate comprises:
if the preheating temperature of the heating tube reaches the preset temperature threshold, controlling the reciprocating motor (403) and the rotating motor (404) to start, and controlling the spout (402) to inject the water into the coffee basket (401);
driving, through a proportional-integral-derivative (PID) control algorithm based on the second control parameter corresponding to each of the brewing stages and a detected motion parameter of the reciprocating rod of the reciprocating motor (403), the reciprocating rod of the reciprocating motor (403) to control the spout (402) to move over the coffee basket (401); and driving, through the PID control algorithm based on the third control parameter corresponding to each of the brewing stages and a detected motion parameter of the rotating plate of the rotating motor (404), the rotating plate of the rotating motor (404) to control the coffee basket (401) to rotate; and
until a water injection amount of the coffee basket (401) reaches a preset water amount threshold, controlling the reciprocating motor (403) and the rotating motor (404) to stop operating, and controlling the spout (402) to stop injecting water.

7. The control method according to claim 6, wherein the determining that the water injection amount of the coffee basket (401) reaches the preset water amount threshold comprises:
detecting water injection duration during which the spout (402) injects the water into the coffee basket (401); and
when the water injection duration reaches a preset duration threshold, determining that the water injection amount of the coffee basket (401) reaches the preset water amount threshold.

8. The control method according to claim 6, wherein the determining that the water injection amount of the coffee basket (401) reaches the preset water amount threshold comprises:
detecting a water flow volume of the spout (402) based on a water flow sensor arranged at the spout (402); and
when the water flow volume reaches a preset water flow volume, determining that the water injection amount of the coffee basket (401) reaches the preset water amount threshold.

9. The control method according to claim 1, wherein after the obtaining the second control parameter that is of the reciprocating motor (403) and corresponds to the preset brewing pattern of each of the brewing stages, and the third control parameter that is of the rotating motor (404) and corresponds to the preset brewing pattern of each of the brewing stages, the control method further comprises:
obtaining a parameter change instruction input through a user interface; and
adjusting, based on the parameter change instruction, a second control parameter and a third control parameter that correspond to any one of the brewing stages.

10. A coffee machine, wherein the coffee machine comprises at least a coffee basket (401), a spout (402), a reciprocating motor (403), a rotating motor (404), a vibration motor (405), and a control apparatus (500);
the coffee basket (401) is configured to hold coffee grounds, the spout (402) is mounted on a reciprocating rod of the reciprocating motor (403), the coffee basket (401) is mounted on a rotating plate of the rotating motor (404), and the rotating motor (404) is mounted on a vibration plate of the vibration motor (405); and
the control apparatus (500) is communicatively connected to the reciprocating motor (403), the rotating motor (404), and the vibration motor (405), and
**characterized in that**
the control apparatus (500) is configured to execute the control method for the coffee machine according to any one of claims 1 to 9.

11. A control apparatus (500) for a coffee machine, comprising:
a central processing unit (CPU) (501), a memory (502), an input/output interface (503), a wired or wireless network interface (504), and a power supply (505), wherein
the memory (502) is a transitory memory or a persistent memory; and
**characterized in that**
the CPU (501) is configured to communicate with the memory (502) and execute an instruction operation in the memory (502) on a control plane functional entity to execute the control method according to any one of claims 1 to 9.

12. A computer-readable storage medium, wherein the computer-readable storage medium comprises an instruction, and
**characterized in that**
when the instruction is run on a computer, the computer is enabled to execute the control method according to any one of claims 1 to 9.
